# EUROPEAN PATENT SPECIFICATION

(11) **EP 0 786 888 B1**
(45) Date of publication and mention of the grant of the patent: **03.08.2005**
(21) Application number: 96120433.6
(22) Date of filing: 18.12.1996
(51) Int. Cl.: H04L 27/26

(54) **Provision of a frequency reference in a multicarrier modulation system**
Versehen eines Mehrträgermodulationssystems mit einer Frequenzreferenz
Provision d'une référence de fréquence dans un système à modulation par multiporteur

(30) Priority: 29.01.1996 JP 1332496
(43) Date of publication of application: 30.07.1997
(73) Proprietor: Samsung Electronics Co., Ltd., Suwon City, Kyungki-do (KR)
(72) Inventor: Saeki, Tomoki, Asahi-ku, Yokohama-city, Kanagawa-ken (JP)
(74) Representative: Grünecker, Kinkeldey, Stockmair & Schwanhäusser Anwaltssozietät

(56) References cited:
- EP-A- 0 653 858
- EP-A- 0 682 426
- WO-A-92/16063

## Description

The present invention relates to a modulation and demodulation technology of a signal in the fields of broadcasting and communication, and more particularly, to a synchronization method for a combined wave signal in an orthogonal frequency division multiplexing (OFDM) method. The present invention also relates to an OFDM modulator, an OFDM demodulator, a quadrature amplitude modulation (QAM) modulator and a QAM demodulator for realizing the synchronization method.

According to an OFDM system, in a transmission end, a group of a digital signal within a period of time is amplitude-modulated (hereinafter, called AM-modulated) with a plurality of carriers, the carriers are combined, the combined carriers are modulated into a main carrier, for example, a channel-2 carrier, to transmit the modulated result. In a receiving end, the main carrier is detected and the OFDM combined wave is fast-Fourier-transformed, to thereby demodulate a desired digital signal. It is required to synchronize between the transmission end and the receiving end to demodulate the combined wave. Therefore, it is necessary to synchronize clock of the transmission end and the receiving end using a sync signal for such a synchronization.

According to a conventional OFDM synchronization method, the transmission end does not modulate a radio frequency (RF) carrier at a first symbol period of a frame and transmits the same, while the receiving end performs phase locking with a carrier during such the non-modulation interval of time using a phase locked loop (PLL) circuit, to thereby synchronize with the transmission end.

However, according to the above conventional method, a reference signal locked with a carrier within the non-modulation interval of time by the PLL circuit becomes unstable due to generation of a phase error in the carrier when noise is contained in the carrier within the non-modulation interval of time.

EP-A-0 682 426 describes an OFDM transmitter and receiver wherein the transmitter includes an inverse fast Fourier transform circuit for converting a digital information signal into a multi-value QAM modulation signal. Furthermore, the transmitter comprises a guard interval setting circuit for periodically generating a guard interval signal, which is equal to a time segment of the multi-value QAM modulation signal. Additionally, the inverse fast Fourier transform circuit generates a pilot signal which corresponds to a given-order carrier and adds the pilot signal to the multi-value QAM modulation signal.

WO 92 16063 A discloses a system for broadcasting and receiving digital data within time divisional multiplex channels, which are grouped in frames, each frame comprising multicarrier symbols with OFDM carriers. In order to provide the possibility for a dynamic an accurate synchronization of the local oscillator of the receiver with that of the transmitter, the transmitted frames include frequency reference symbols, which carry information to generate a peak value at least one reference peak position within the frequency raster being separated by at least one carrier position from each of the edges of the frequency raster and by at least two carrier positions from an eventual subsequent reference peak position.

EP-A-0 653 858 discloses an OFDM synchronization demodulation circuit for receiving an OFDM modulated signal having an available symbol period and a guard period in waveform which coincides with a part of the available symbol period. Furthermore, the demodulation circuit comprises a guard timing detection circuit for detecting a timing of the guard period.

To solve the above problem, it is an object of the present invention to provide an OFDM method, a synchronization method, a modulator and a demodulator for OFDM for performing the OFDM method, in which a reference signal having an accurate phase is produced when a transmission end, that is, the OFDM modulator produces clock and the reference signal for modulation (for example, QAM) which are used in the OFDM from a carrier, and a receiving end, that is, the OFDM demodulator reproduces the reference signal having the accurate phase although a signal-to-noise (S/N) ratio of the carrier is poor.

This problem is solved by the subject matter of the independent claims.

Preferred embodiments are the subject matter of the dependent claims.

The preferred embodiments are described with reference to the drawings wherein:
FIG. 1 is a flowchart diagram for explaining the principle of the present invention.
FIG. 2 is a graphic diagram for explaining the format of an OFDM signal.
FIG. 3 is a waveform diagram for explaining a sync signal.
FIG. 4 is a block diagram of an OFDM modulator according to one embodiment of the present invention.
FIG. 5 is a waveform diagram for explaining a combined wave obtained by an inverse fast Fourier transform of the OFDM modulator of FIG. 4.
FIG. 6 is a block diagram of an OFDM demodulator according to one embodiment of the present invention.
FIG. 7 is a block diagram of the sync and modulation portion in the OFDM modulator of FIG. 4.
FIG. 8 is a block diagram of the clock reproduction and sync detection portion in the OFDM demodulator of FIG. 6.
FIG. 9 is a block diagram of a hold circuit used in the OFDM demodulator of FIG. 6.
FIG. 10 is a timing diagram for explaining an acquisition time of the hold circuit of FIG. 9.

A preferred embodiment of the present invention will be described below in more detail with reference to the accompanying drawings.

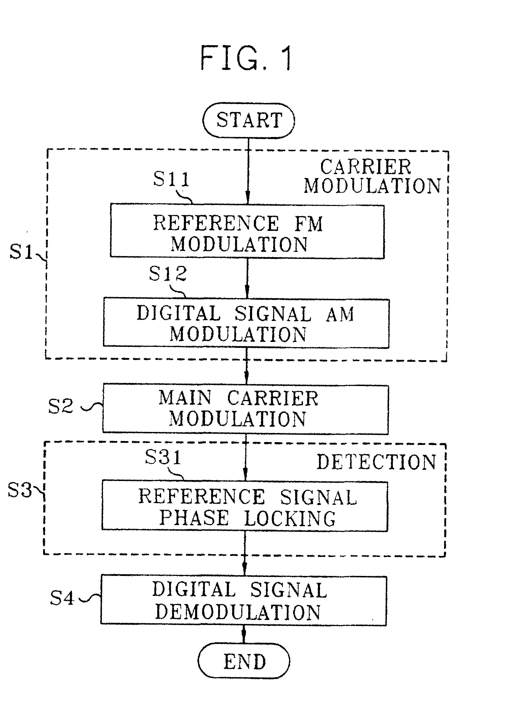

As shown in FIG. 1 explaining the principle of the present invention, an orthogonal frequency division multiplexing (OFDM) method includes the steps of (S1) AM-modulating a group of a digital signal with a plurality of carriers; (S2) combining the AM-modulated carrier and modulating the combined carrier into a main carrier; (S3) detecting the main carrier, and (S4) fast-Fourier-transforming the combined carrier to demodulate the digital signal, wherein the AM-modulation step (S1) includes the steps of (S11) frequency-modulating (hereinafter called FM-modulating) a reference signal at a symbol period, and (S12) AM-modulating the digital signal at the other symbol periods, and wherein the detecting step (S3) includes the step of (S31) phase-locking the reproduced reference signal with the FM-modulated transmitted reference signal.

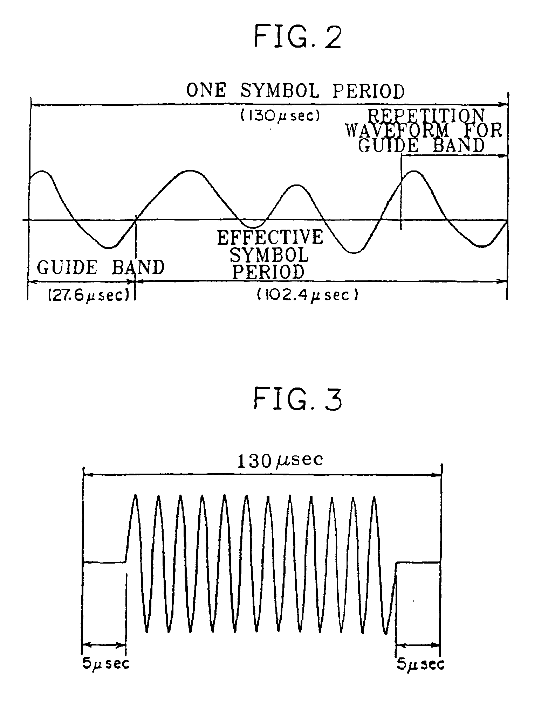

FIG. 2 is a graphic diagram for explaining the format of an OFDM signal. One symbol period is composed of an effective symbol period and a guide band. One frame is formed of a set of symbols. In this embodiment of the present invention, one frame is formed of 127 symbols. A sync signal is inserted in the head of the one frame. FIG. 3 is a waveform diagram for explaining the format of a sync signal which is used in this embodiment of the present invention. The sync signal has 12 cycles of a 100KHz signal whose phase is identical with the clock and the width of the sync signal is 130µ sec. A transmitter employing the embodiment of the present invention FM-modulates a sync signal shown in FIG. 3 and transmits the modulated result. The following Table 1 shows a specification of the OFDM system involving the one embodiment of the present invention.

**Table 1**

| . specification of the OFDM system | |
|---|---|
| item | value |
| number of carrier | 1001 |
| guide band | 27.6µ sec |
| effective symbol interval | 102.4 µsec |
| bit rate | 30.8Mbit/sec |
| main clock | 10.0 MHz |
| one frame | 127symbols |
| sync signal | 100kHz 12cycles |
| clock phase | carrier locking |
| one symbol | 130 µsec |

Hereinbelow, an OFDM system satisfying the above specification will be described.

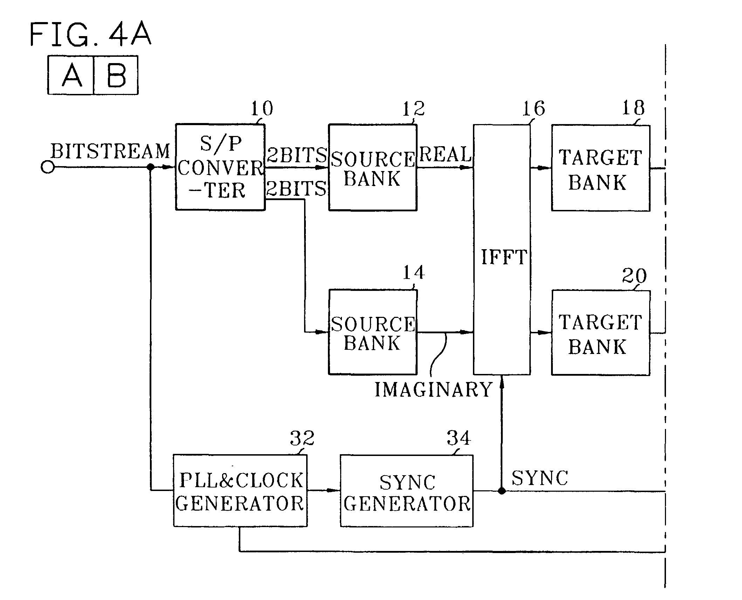

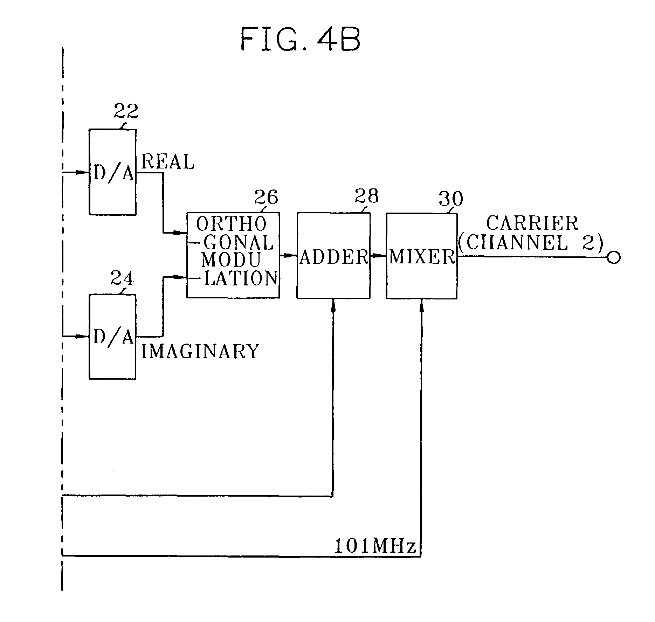

FIG. 4 is a block diagram of an OFDM modulator according to one embodiment of the present invention. The OFDM modulator schematically includes a S/P converter 10 for serial-to-parallel converting a received input bitstream, an inverse fast Fourier transformer (IFFT) 16 for inverse-fast-Fourier-transforming the S/P converted signal, a quadrature two-phase modulator 26 for quadrature two-phase-modulating the analog inverse-fast-Fourier-transformed result, an adder 28 for adding a sync signal to the quadrature-two- phase-modulated signal, and a mixer 30 for mixing a reference signal and the quadrature two-phase-modulated signal, to produce a carrier.

A serial input bitstream is converted into two 2-bit signals, that is, a real signal and an imaginary signal, by the S/P converter 10. The 2-bit real signal and the 2-bit imaginary signal are supplied to source banks 12 and 14, respectively, and formatted into data appropriate for an input format of the IFFT 16. The formatted data is supplied to the IFFT 16 in units of one symbol. For example, each source bank 12 or 14 sends 2-bit data with respect to 1024 carriers. The IFFT 16 produces one carrier from a value of the amplitude according to the two input data composed of the real signal and the imaginary signal, to thereby output amplitude data of a combined wave of the 1024 carriers. Thus, 1024 amplitude data are output.

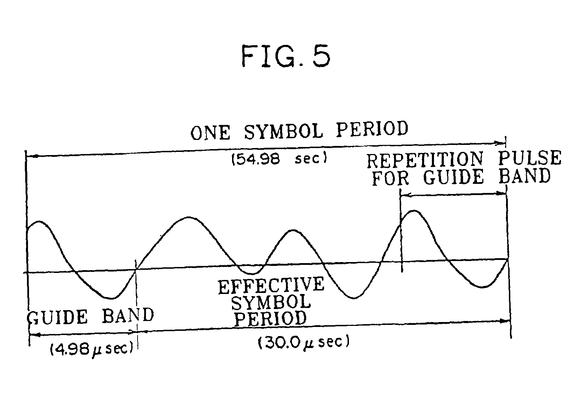

The 1024 amplitude data of the combined wave of the carrier output from the IFFT 16 are recorded in target banks 18 and 20 connected to the output of the IFFT 16. FIG. 5 shows an amplitude corresponding to one symbol period of a combined wave output from the IFFT 16 and recorded in the banks 18 and 20. The target banks 18 and 20 add the waveform data of a guide band to the recorded combined wave, to output a predetermined sampling frequency. The digital signals output from the target banks 18 and 20 are converted into analog signals by the D/A converters 22 and 24, respectively, and then supplied to the quadrature two-phase modulator 26.

The quadrature two-phase modulator 26 AM-modulates the real signal supplied from the D/A converter 22 and the imaginary signal supplied from the D/A converter 24 into sine and cosine carriers, and adds the AM-modulated sine carrier and the cosine carrier, to thereby generate a quadrature amplitude modulation (QAM) signal in which a carrier is suppressed.

The adder 28 receives a sync signal and the QAM-modulated signal output from the quadrature two-phase modulator 26 and adds the sync signal to the QAM-modulated signal. Here, the sync signal is generated by the sync generator 34 for generating a sync signal for use in the OFDM modulator. The sync generator 34 is connected to a phase locked loop (PLL) and clock generator 32 for generating clock or a reference carrier signal synchronized with the input bitstream signal, to generate a sync signal from the synchronized clock.

The mixer 30 is connected to the adder 28 and the PLL and clock generator 32, and mixes the a reference signal of 101MHz obtained in the PLL and clock generator 32 with the QAM-modulated signal obtained by the adder 28, to produce a carrier of 70.2MHz, by which a channel-2 carrier in the U. S. A. is obtained.

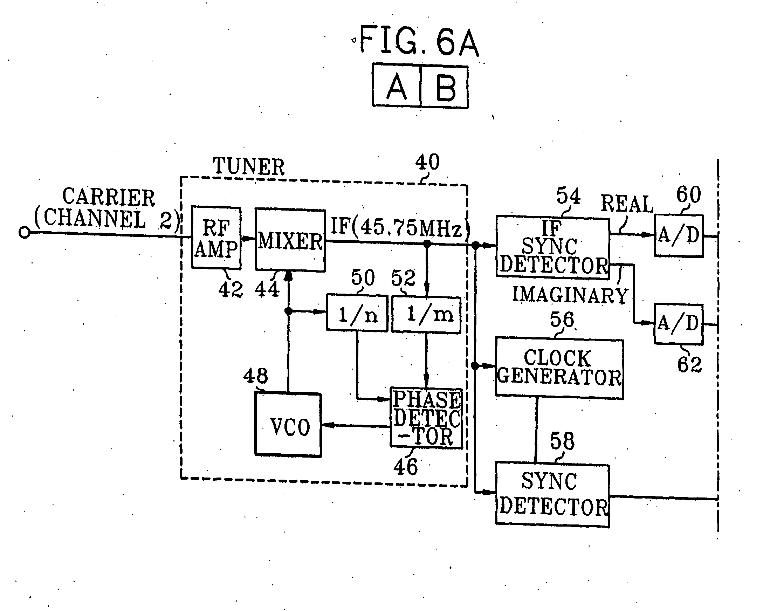

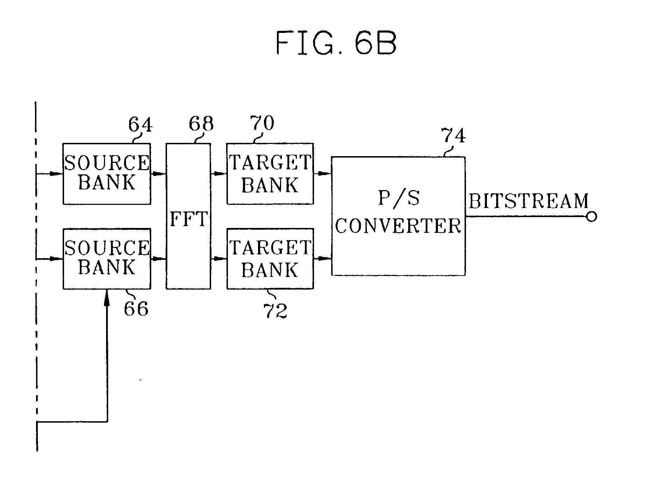

FIG. 6 is a block diagram of an OFDM demodulator. The OFDM demodulator includes a tuner 40. The tuner 40 may use the same tuner as that of a conventional television receiver. The carrier of channel 2 input to the tuner is phase-locked with an intermediate frequency signal output from the tuner 40.

An IF sync detector 54 connected to the tuner 40 for receiving an IF signal uses a sync detection method to demodulate a real signal and an imaginary signal from the input IF signal. The clock generator 56 reproduces clock which is phase-locked with the IF using IF signal received from the tuner 40. The sync detector 58 detects the IF signal received from the tuner 40, and detects a temporal position of a sync signal of a reference signal, for example, 100KHz. As a result, a sync signal for use in the OFDM demodulator.

The analog real and imaginary signals demodulated in the IF sync detector 54 are converted into digital signals by the A/D converters 60 and 62, respectively, and then supplied to source banks 64 and 66, respectively. The source banks 64 and 66 convert the input digital data into a data format appropriate for an input format in a fast Fourier transformer (FFT) 68, in order to supply the input digital signal data to the FFT 68.

The real and imaginary signals are supplied to the FFT 68 for performing discrete fast-Fourier transform via the source banks 64 and 66. The FFT 68 fast-Fourier-transforms a combined carrier (for example, composed of 1024 data) obtained from the input real and imaginary signals, and calculates a value of the amplitude of each carrier to demodulate a digital signal. The demodulated two digital signals are supplied to a P/S converter 74 for producing a serial signal from two data, for example, 2 bits, via target banks 70 and 72. The P/S converter 74 outputs a bitstream corresponding to the input bitstream when encoding.

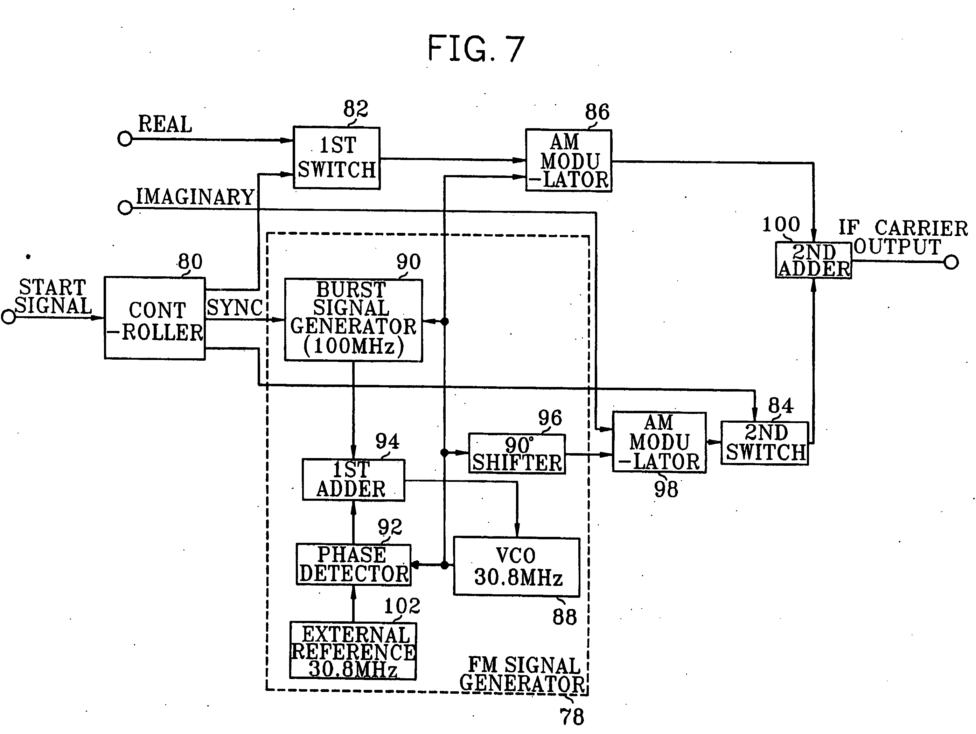

FIG. 7 is a block diagram of the sync and modulation portion in the OFDM modulator of FIG. 4. Taking a case where an IF carrier of 30.8MHz is used as an example, the operation of the sync and modulation portion will be described.

The sync and modulation portion includes an FM signal generator 78 for generating an FM-modulated voltage controlled oscillation signal and the 90 ° phase-shifted signal thereof, a first AM-modulator 86 for AM-modulating the FM-modulated signal (a carrier) into a real signal, a second AM-modulator 98 for AM-modulating the 90 ° phase-shifted carrier into an imaginary signal, and a second adder 100 adds the respective carriers modulated in the first and second AM-modulators 86 and 98. The sync and modulation portion further includes a first switch 82 for switching the real signal to the first AM-modulator 86, a second switch 84 for switching the output of the second AM-modulator 98 to the second adder 100, and a controller 80 for deactivating the first and second switches 82 and 84.

The operation of the FM signal generator 78 for generating the FM-modulated voltage controlled oscillation signal and the 90° phase-shifted signal will be described. The IF carrier is phase-locked with the transmission frequency of a bitstream, to thereby oscillate at 30.8MHz, and the phase-locking is performed in an internal voltage controlled oscillator (VCO) 88 which can change a frequency at a direct-current. A phase detector 92 compares a carrier of an external reference signal of 30.8MHz input from an external reference signal generator 102 with a carrier obtained from the VCO 88, to synchronize the former with the latter. The output signal of the phase detector 92 controls the VCO 88 via the first adder 94. Since the carrier of 30.8MHz is FM-modulated at a reference signal of 100KHz, the first adder 94 superimposes the reference signal of 100KHz generated from a burst signal generator 90 on the output signal of the phase detector 92. When the carrier is not FM-modulated at the reference signal, the first adder 94 passes through the output signal of the phase detector 92 to be applied to the VCO 88. The burst signal generator 90 divides the frequency of 30.8MHz into 308 subfrequencies, and produces a reference signal of 100KHz which is used for FM-modulation of the carrier at 100KHz for one symbol period. Accordingly, the 30.8MHz signal supplied from the VCO 88 is FM-modulated to be supplied to the first modulator 86. Moreover, the phase of the FM-modulated carrier supplied from the VCO 88 is changed by 90° in the 90° phase shifter 96 to be supplied to the second modulator 98.

Next, the whole operation of the sync and modulation portion will be described. The controller 80 receives a start signal and then determines a position into which the reference signal of 100KHz is inserted. The, the controller 80 controls the switching operations of the first and second switches 82 and 84. During a sync signal period, the controller 80 turns off the first switch 82 to generate a DC signal by turning off the real signal. Thus, during the sync signal period, the FM signal output from the VCO 88 passes through the first AM modulator 86 without being AM-modulated. Meanwhile, the controller 80 turns off the second switch 84 to turn off the AM-modulated signal by the second AM modulator 86 during the sync signal period, thereby performing FM-modulation of the sync signal in the IF signal of 30.8MHz.

Meanwhile, during the other periods other than the sync signal, a quadrature two-phase modulation operation is performed by the real and imaginary signals.

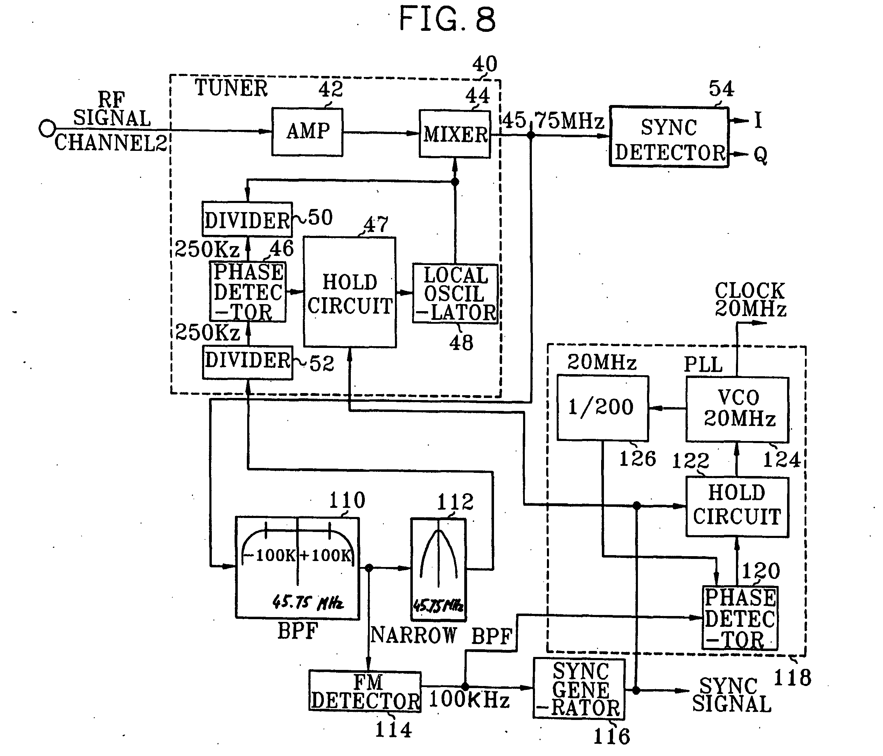

FIG. 8 is a block diagram of the clock reproduction and sync detection portion in the OFDM demodulator of FIG. 6. Hereinafter, a case where a channel 2 RF signal is input will be described as an example. The like elements having the same functions as those of the elements such as the tuner 40 and the sync detector 54 of the OFDM demodulator shown in FIG. 6 have the like reference numerals.

A sync signal detector includes a band-pass filter 110, an FM detector 114, a sync generator 116, and further includes a narrow-band-pass filter 112 of 45.75MHz for supplying an IF signal to a divider 52, wherein the divided IF signal is phase compared in a phase detector 46 for local oscillation. A clock reproducer includes a phase locking loop of 20MHz.

The IF signal passes through the band-pass filter 110 (± 100 kHz) to demodulate a sync signal, to be supplied to the FM detector 114 to obtain a sync signal of 100 kHz. The sync generator 116 produces a frame sync signal having a width of 130µm at a signal of 100 kHz.

Meanwhile, the 100 kHz signal is supplied to one end of a phase detector 120 in the phase locking loop 118 for reproduction of clock of 20MHz. The signal output from the 20MHz VCO 124 is divided into 1/200, that is, 100KHz in a signal divider 126 and the divided signal is supplied to the other end of the phase detector 120. The phase detector 120 phase-compares the 100KHz sync signal with the divided signal output from the VCO 124. The phase comparison resultant signal maintains the voltage by a hold circuit 122 during the sync signal period supplied from the sync signal generator 116. That is, the divided 100KHz signal is phase-locked with the 100KHz sync signal, and the phase locking loop 118 operates only during the sync signal period. By doing so, the 20MHz clock is reproduced from the VCO 124.

A mixer 44 produces an IF signal of 45.75MHz by a local oscillation signal of 101MHz generated in a local oscillator 48. A phase detector 46 for local oscillation compares a phase of the local oscillation signal of 101MHz output from the VCO 48 and divided into 1/404 via a divider 50 with a phase of a signal which is divided into 1/183 supplied via a narrow-band-pass filter 112 and a divider 52. The VCO 48 maintains the 101MHz local oscillation signal using the phase comparison signal. Here, the phase comparison signal is maintained by a hold circuit 47 during the sync signal period when the sync signal is generated from the sync generator 116. The combined signal for the OFDM is modulated in a modulator as shown in FIG. 7 via an IF amplifier (not shown).

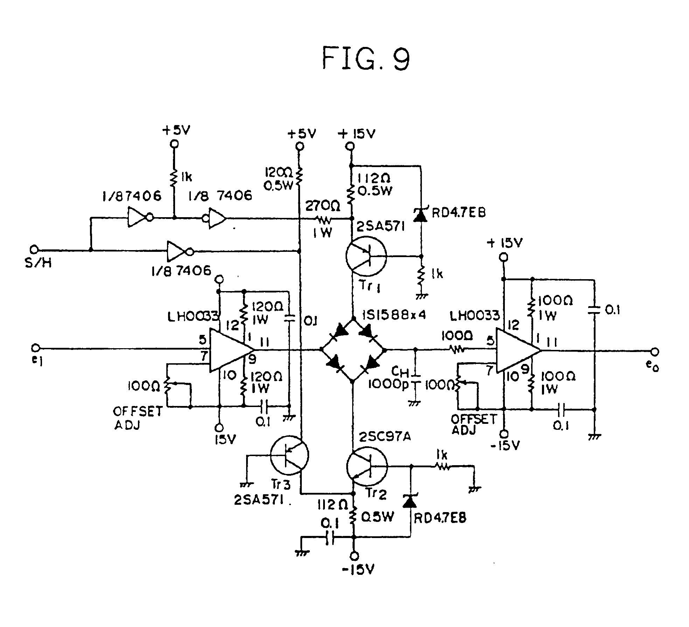

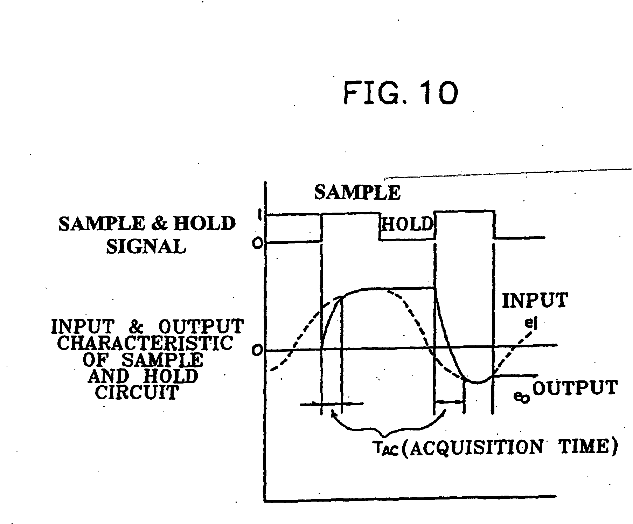

FIG. 9 is a block diagram of a high-speed hold circuit 47 or 122 used in the OFDM demodulator of FIG. 6. FIG. 10 is a timing diagram for explaining an acquisition time of the hold circuit of FIG. 9.

As described above, the OFDM method, and the OFDM modulator and demodulator employing the OFDM method according to the present invention demodulates an OFDM combined wave signal of an accurate phase at a receiving end without being interrupted by the noise and external signals, and particularly can obtain synchronization even in the OFDM carrier of a low level. Also, the present invention can perform an OFDM which can well endure impulse noise. Also, the present invention can perform a strong OFDM although with an external interference wave such as a ghost or an identical channel interference. Using the OFDM synchronization method according to the present invention, sensitivity of a receiver can be enhanced as in a television receiver.

## Claims

1. An OFDM, orthogonal frequency division multiplexing, synchronisation method comprising the steps of:
S1) AM-modulating a plurality of carriers with a group of digital signals;
S2) combining said plurality of AM-modulated carriers to provide combined carriers and RF modulating the combined carriers for transmission to a receiver;
S3) detecting the RF modulated combined carriers at the receiver;
S4) fast-Fourier-transforming said combined carriers to demodulate the digital signals,
wherein said AM-modulating step S1) comprises the steps of
S11) FM-modulating a reference signal by turning off a real signal part of said digital signals during predetermined sync periods to provide a frequency modulated reference signal, and
S12) AM-modulating the digital signals during outside said predetermined sync periods, and
wherein said detecting step S3) comprises the step S31) of:
detecting the reference signal and producing a sync signal; and
reproducing a reference clock by phase-locking an internal reference signal with said detected reference signal during said produced sync signal.

2. The OFDM synchronization method according to claim 1, wherein said FM-modulated reference signal has a frequency obtained by dividing the frequency of an IF carrier into an integer number of sub frequencies.

3. The OFDM synchronization method according to claim 2, further comprising the step of phase-locking a second reference signal according to a downconverted version of said RF modulated combined carriers.

4. An OFDM, orthogonal frequency division multiplexing, modulator, comprising:
a serial-to-parallel converter (10) for converting a bitstream of input data from serial to parallel format;
an inverse fast Fourier transformer (16) operative to inverse-fast-Fourier-transform data output from said serial-to-parallel converter (10);
a D/A (digital-to-analog) converter (22, 24) for converting the inverse fast Fourier transformed data from digital to analog form;
a sync and modulation unit (26) for AM-modulating the data output by said D/A converter (22, 24) and for generating a FM reference signal for synchronization during a predetermined sync period; and
means (30) for converting said AM-modulated data and said generated FM reference signal onto a carrier frequency,
wherein said sync and modulation unit (26) comprises:
an FM signal generator (78) for generating said reference signal, including a FM reference signal and an FM quadrature-phase reference signal thereof;
an AM-modulator unit (86, 98, 82, 84, 100) for AM-modulating said output data of said D/A converter outside said predetermined sync period and for outputting said FM reference signal during said predetermined sync period; and
a controller (80) for operating said AM-modulator unit in accordance with said predetermined sync periods, said controller being adapted to turn off said output data of said D/A converter corresponding to a real signal of said input bitstream during said predetermined sync periods in order to generate said FM reference signal in said AM-modulator unit.

5. The OFDM modulator as defined by claim 4, further comprising first and second source banks (12, 14), and first and second target banks (18, 20), wherein said serial-to-parallel converter (10) is adapted to produce two sets of parallel data, including a real data signal and an imaginary data signal; said first and second source banks (12, 14) are further adapted to receive and format said real data signal and said imaginary data signal, respectively; and to
supply said formatted real data signal and imaginary data signal to said inverse fast Fourier transformer (16), said first and second target banks (18, 20) being coupled to outputs of said inverse fast Fourier transformer (16) for receiving transformed real and imaginary signals, and outputting said transformed real and imaginary signals to said D/A converter (22, 24).

6. The OFDM modulator as defined by claim 5, wherein said sync and modulation unit (26) is further coupled to the output of said first and second target bank (18, 20), for AM-modulating said transformed real signal and imaginary signal into sine and cosine carriers, and for adding said AM-modulated sine and cosine carriers to generate a quadrature amplitude modulation signal with a suppressed carrier.

7. The OFDM modulator as defined by claim 6, further comprising a sync generator (34) for producing a sync signal, wherein said sync and modulation unit (26) is further coupled to said sync generator (34) for adding said sync signal and said quadrature amplitude modulation signal together.

8. The OFDM modulator as defined by claim 7, further comprising a phase locked loop and clock generator (32) coupled with said sync generator (34) and with said means (30) for converting said AM-modulated data and said generated FM reference signal, wherein said phase locked loop and clock generator (32) is further adapted to generate a clock signal synchronized with said bitstream of input data and wherein said means (30) for converting said AM-modulated data and said generated FM reference signal is adapted to produce a carrier of a predetermined frequency.

## Patentansprüche

1. Ein OFDM -, Orthogonalfrequenzteilungsmultiplex -, Synchronisationsverfahren, die Schritte umfassend:
S1) AM-Modulieren einer Mehrzahl von Trägem mit einer Gruppe digitaler Signale;
S2) Kombinieren der genannten Mehrzahl von AM-modulierten Trägem, um kombinierte Träger bereitzustellen, und RF-Modulieren der kombinierten Träger zum Senden an einen Empfänger;
S3) Erfassen der RF-modulierten kombinierten Träger durch den Empfänger;
S4) Fast-Fourier-Transformieren der genannten kombinierten Träger, um die digitalen Signale zu demodulieren,
worin der genannte AM-Modulations-Schritt S1) die Schritte
S11) FM-Modulieren eines Bezugssignals durch Ausblenden eines reellen Signalteils der genannten digitalen Signale während vorbestimmter Synchronperioden, um ein frequenzmoduliertes Bezugssignal bereitzustellen, und
S12) AM-Modulieren der digitalen Signale außerhalb der genannten vorbestimmten Synchronperioden umfasst, und
worin der genannte Erfassungsschritt S3) den Schritt S31) des Erfassens des Bezugssignals und Erzeugens eines Synchronsignals; und des Reproduzierens eines Bezugstakts durch Phasenkoppeln (phase-locking) eines internen Bezugssignals mit dem genannten erfassten Bezugssignal während des genannten erzeugten Synchronsignals umfasst.

2. Das OFDM-Synchronisationsverfahren gemäß Anspruch 1, worin das genannte FM-modulierte Bezugssignal eine Frequenz aufweist, die durch Teilen der Frequenz eines IF-Trägers in eine geradzahlige Anzahl von Unterfrequenzen erhalten wird.

3. Das OFDM-Synchronisationsverfahren gemäß Anspruch 2, weiterhin den Schritt des Phasenkoppelns eines zweiten Bezugssignals gemäß einer abwärtsgewandelten Version der genannten RF-modulierten kombinierten Träger umfassend.

4. Ein OFDM -, Orthogonalfrequenzteilungsmultiplex -, Modulator, umfassend:
einen Seriell-Parallel-Wandler (10) zum Umwandeln eines Bitstroms von Eingangsdaten von einem seriellen in ein paralleles Format;
einen Invers-Fast-Fourier-Transformierer (16), der bewirkt, dass Daten, die von dem genannten Seriell-Parallel-Wandler (10) ausgegeben werden, einer inversen Fast-Fourier-Transformation unterzogen werden;
einen D/A-(Digital-zu-Analog-)Wandler (22, 24) zum Umwandeln der einer inversen Fast-Fourier-Transformation unterzogenen Daten von digitaler Form in analoge Form;
eine Synchron- und Modulationseinheit (26) zum AM-Modulieren der von dem genannten D/A-Wandler (22, 24) ausgegebenen Daten und zum Erzeugen eines FM-Bezugssignals zur Synchronisation während einer vorbestimmten Synchronperiode; und
eine Vorrichtung (30) zum Umwandeln der genannten AM-modulierten Daten und des genannten erzeugten FM-Bezugssignals auf eine Trägerfrequenz,
worin die genannte Synchron- und Modulationseinheit (26) umfasst:
einen FM-Signalgenerator (78) zum Erzeugen des genannten Bezugssignals, einschließlich eines FM-Bezugssignals und eines FM-Quadraturphasenbezugssignals desselben;
eine AM-Modulatoreinheit (86, 98, 82, 84, 100) zum AM-Modulieren der genannten Ausgangsdaten des genannten D/A-Wandlers außerhalb der genannten vorbestimmten Synchronperiode und zum Ausgeben des genannten FM-Bezugssignals während der genannten vorbestimmten Synchronperiode; und
einen Kontroller (80) zum Betreiben der genannten AM-Modulatoreinheit nach Maßgabe der genannten vorbestimmten Synchronperioden, wobei der genannte Kontroller geeignet ist, die genannten Ausgangsdaten des genannten D/A-Wandlers, die einem reellen Signal des genannten Eingangsbitstroms entsprechen, während der genannten vorbestimmten Synchronperioden auszublenden, um das genannte FM-Bezugssignal in der genannten AM-Modulatoreinheit zu erzeugen.

5. Der wie in Anspruch 4 definierte OFDM-Modulator, weiterhin umfassend erste und zweite Quellbänke (12, 14) und erste und zweite Zielbänke (18, 20), worin der genannte Seriell-Parallel-Wandler (10) geeignet ist, zwei Sätze von parallelen Daten, einschließlich eines reellen Datensignals und eines imaginären Datensignals, zu erzeugen; wobei die genannten ersten und zweiten Quellbänke (12, 14) weiterhin geeignet sind, das genannte reelle Datensignal bzw. das genannte imaginäre Datensignal zu empfangen und zu formatieren und
das genannte formatierte reelle Datensignal und imaginäre Datensignal dem genannten Invers-Fast-Fourier-Transformierer (16) zuzuführen, wobei die ersten und zweiten Zielbänke (18, 20) mit Ausgängen des genannten Invers-Fast-Fourier-Transformierers (16) zum Empfangen der transformierten reellen und imaginären Signale und zum Ausgeben der genannten transformierten reellen und imaginären Signale an den genannten D/A-Wandler (22, 24) verbunden sind.

6. Der wie in Anspruch 5 definierte OFDM-Modulator, worin die genannte Synchron- und Modulationseinheit (26) weiterhin mit dem Ausgang der genannten ersten und zweiten Zielbank (18, 20) zum AM-Modulieren der genannten transformierten reellen und imaginären Signale in Sinus- und Kosinusträger und zum Addieren der genannten AM-modulierten Sinus- und Kosinusträger, um ein Quadraturamplitudenmodulationssignal mit einem unterdrückten Träger zu erzeugen, verbunden ist.

7. Der wie in Anspruch 6 definierte OFDM-Modulator, weiterhin einen Synchrongenerator (34) zum Erzeugen eines Synchronsignals umfassend, worin die genannte Synchron- und Modulationseinheit (26) weiterhin mit dem genannten Synchrongenerator (34) zum Addieren des genannten Synchronsignals und des genannten Quadraturamplitudenmodulationssignals verbunden ist.

8. Der wie in Anspruch 7 definierte OFDM-Modulator, weiterhin umfassend eine Phase-Locked Loop und einen Taktgenerator (32), der mit dem genannten Synchrongenerator (34) und mit der genannten Vorrichtung (30) zum Umwandeln der genannten AM-modulierten Daten und des genannten erzeugten FM-Bezugssignals verbunden ist, worin die genannte Phase-Locked Loop und der Taktgenerator (32) weiterhin geeignet sind, ein Taktsignal zu erzeugen, das mit dem Bitstrom der Eingangsdaten synchronisiert ist, und worin die genannte Vorrichtung (30) zum Umwandeln der genannten AM-modulierten Daten und des genannten erzeugten FM-Bezugssignals geeignet ist, einen Träger einer vorbestimmten Frequenz zu erzeugen.

## Revendications

1. Procédé de synchronisation en OFDM (multiplexage par répartition de fréquences orthogonales), comprenant les étapes de :
S1) modulation en amplitude (AM) d'une pluralité de porteuses ayant un groupe de signaux numériques ;
S2) combinaison de ladite pluralité de porteuses modulées en amplitude pour constituer des porteuses combinées, et modulation en radiofréquence (RF) des porteuses combinées pour transmission à un récepteur ;
S3) détection des porteuses combinées, modulées en radiofréquence, au niveau du récepteur ;
S4) transformation de Fourier rapide desdites porteuses combinées, pour démoduler les signaux numériques,
dans lequel ladite étape de modulation en amplitude S1) comprend les étapes de :
S11) modulation en fréquence (FM) d'un signal de référence, en coupant une partie de signal réel desdits signaux numériques, pendant des périodes prédéterminées de synchronisation, pour fournir un signal de référence modulé en fréquence, et
S12) modulation en amplitude des signaux numériques en dehors desdites périodes prédéterminées de synchronisation, et
dans lequel ladite étape de détection S3) comprend l'étape S31) de :
détection du signal de référence, et production d'un signal de synchronisation ; et
reproduction d'une horloge de référence, par asservissement de phase d'un signal de référence interne, audit signal détecté de référence, pendant ledit signal produit de synchronisation.

2. Procédé de synchronisation en OFDM selon la revendication 1, dans lequel ledit signal de référence modulé en fréquence présente une fréquence, qui est obtenue en divisant la fréquence d'une porteuse à fréquence intermédiaire (IF) en un nombre entier de sous-fréquences.

3. Procédé de synchronisation en OFDM selon la revendication 2, comprenant en outre l'étape d'asservissement de phase d'un second signal de référence, selon une version à fréquence abaissée par changement de fréquence desdites porteuses combinées modulées en radiofréquence.

4. Modulateur OFDM (multiplexage par répartition de fréquences orthogonales), comprenant :
un convertisseur série / parallèle (10) pour convertir un flux de bits de données d'entrée, d'une forme série en une forme parallèle ;
un transformateur de Fourier rapide inverse (16) pour opérer une transformation de Fourier rapide inverse sur les données provenant dudit convertisseur série / parallèle (10) ;
un convertisseur N/A (numérique / analogique) (22, 24) pour convertir les données, ayant subi la transformation de Fourier rapide inverse, d'une forme numérique en une forme analogique ;
une unité de synchronisation et de modulation (26) pour moduler en amplitude les données provenant dudit convertisseur N/A (22, 24) et pour produire un signal de référence modulé en fréquence, pour une synchronisation pendant une période prédéterminée de synchronisation ; et
un moyen (30) pour convertir lesdites données modulées en amplitude et ledit signal de référence produit modulé en fréquence, sur une fréquence de porteuse,
dans lequel ladite unité de synchronisation et de modulation (26) comprend :
un générateur de signaux modulés en fréquence (78) pour produire ledit signal de référence, comprenant un signal de référence modulé en fréquence et un signal de référence modulé en fréquence et à phase en quadrature avec celui-ci ;
une unité formant modulateur d'amplitude (86, 98, 82, 84, 100) pour moduler en amplitude lesdites données de sortie dudit convertisseur N/A, en dehors de ladite période prédéterminée de synchronisation et pour fournir ledit signal de référence modulé en fréquence pendant ladite période prédéterminée de synchronisation ; et
un régisseur (80) pour faire fonctionner ladite unité formant modulateur d'amplitude en fonction desdites périodes prédéterminées de synchronisation, ledit régisseur étant propre à bloquer lesdites données de sortie dudit convertisseur N/A, correspondant à un signal réel dudit flux de bits d'entrée, pendant lesdites périodes prédéterminées de synchronisation, afin de produire ledit signal de référence modulé en fréquence, dans ladite unité formant modulateur d'amplitude.

5. Modulateur OFDM selon la revendication 4, comprenant en outre des première et seconde batteries sources (12, 14) et des première et seconde batteries cibles (18, 20), dans lequel ledit convertisseur série / parallèle (10) est propre à produire deux ensembles de données parallèles, comprenant un signal réel de données et un signal imaginaire de données, lesdites première et seconde batteries sources (12, 14) étant en outre propres à recevoir et à formater respectivement ledit signal réel de données et ledit signal imaginaire de données ; et à
fournir ledit signal réel et formaté de données et ledit signal imaginaire et formaté de données audit transformateur de Fourier rapide inverse (16), lesdites première et seconde batteries cibles (18, 20) étant données à des sorties dudit transformateur de Fourier rapide inverse (16) pour recevoir les signaux réel et imaginaire transformés, et pour fournir lesdits signaux réel et imaginaire transformés audit convertisseur N/A (22, 24).

6. Modulateur OFDM selon la revendication 5, dans lequel ladite unité de synchronisation et de modulation (26) est en outre reliée à la sortie desdits première et seconde batteries cibles (18, 20), pour moduler en amplitude ledit signal réel transformé et ledit signal imaginaire transformé, en des porteuses sinus et cosinus, et pour ajouter lesdites porteuses sinus et cosinus modulées en amplitude, afin de produire un signal à modulation d'amplitude en quadrature, avec suppression d'une porteuse.

7. Modulateur OFDM selon la revendication 6, comprenant en outre un générateur de synchronisation (34) pour produire un signal de synchronisation, dans lequel ladite unité de synchronisation et de modulation (26) est en outre reliée audit générateur de synchronisation (34), pour additionner ledit signal de synchronisation et ledit signal à modulation d'amplitude en quadrature.

8. Modulateur OFDM selon la revendication 7, comprenant en outre un générateur de boucle à phase asservie et d'horloge (32), relié audit générateur de synchronisation (34) et audit moyen (30) servant à convertir lesdites données modulées en amplitude et ledit signal produit de référence modulé en fréquence, dans lequel ledit générateur de boucle à phase asservie et d'horloge (32) est en outre propre à produire un signal d'horloge synchronisé avec ledit flux de bits de données d'entrée, et dans lequel ledit moyen (30), servant à convertir lesdites données modulées en amplitude et ledit signal produit de référence modulé en fréquence, est propre à produire une porteuse ayant une fréquence prédéterminée.
